## Europäisches Patentamt
## European Patent Office
## Office européen des brevets

(11) Publication number: **0 177 091**
**A1**

# (12) EUROPEAN PATENT APPLICATION

(21) Application number: **85201501.5**

(22) Date of filing: **19.09.85**

(51) Int. Cl.⁴: **A 01 D 43/10**

(30) Priority: **26.09.84 NL 8402926**

(43) Date of publication of application:
**09.04.86 Bulletin 86/15**

(84) Designated Contracting States:
**AT DE FR GB IT NL SE**

(71) Applicant: **C. van der Lely N.V.**
**Weverskade 10 P.O. Box 26**
**NL-3155 ZG Maasland(NL)**

(72) Inventor: **Van der Lely, Ary**
**10A Weverskade**
**Maasland(NL)**

(72) Inventor: **Bom, Cornelis Johannes Gerardus**
**16 Laan van Nieuw Rozenburg**
**Rozenburg(NL)**

(74) Representative: **Mulder, Herman et al,**
**Octrooibureau Van der Lely N.V. Weverskade 10 P.O. Box 26**
**NL-3155 ZG Maasland(NL)**

(54) **Mowing machine.**

(57) A mowing machine comprises pairs of contrarotating mowing members (5) arranged in a row and having blades (40). Behind each pair of mowing members (5) is a pair of conditioning members (31 to 36). The conditioning members (31 to 36) act to crush or crimp crop cut by the mowing members (5). The conditioning members are rotatable about axes (38) which slope forwardly from bottom to top. The paths of the outer peripheries of the conditioning members (31 to 36) of each pair intersect each other and lie close to the paths of the blades (40) of the adjacent mowing members (5). The conditioning members (31 to 36) extend to a level below the plane of the blades (40). The conditioning members (31,32; 35,36) at the ends of the machine are disposed to discharge crop towards the centre.

./...

EP 0 177 091 A1

FIG. 1

FIG. 4

- 1 -

<u>2621</u>

MOWING MACHINES

This invention relates to a mowing machine for cutting crop, comprising at least one pair of mowing members provided with blades, the mowing members of each pair being rotatable in opposite directions to each other about upwardly directed axes, the machine further comprising pairs of members for conditioning cut crop, these members being disposed behind the mowing members, with respect to the normal direction of operative travel of the machine, the members of each pair being rotatable in opposite directions to each other about upwardly directed axes.

A mowing machine of this type is known, but the conditioning members are relatively far from the mowing members and from each other. Also, the position of the mowing members relatively to the conditioning members is unsatisfactory.

The same applies to a mowing machine with drum-shaped mowing members, wherein the conditioning members are situated far from the mowing members to enable stones and the like to escape between the mowing members and the conditioning members.

An object underlying the present invention is the provision of a mowing machine of the type described above, intended in particular for the conditioning of leafy crops which can be half-broken without extensive loss of leaves. By "half-broken" is meant the crushing or crimping of the crop without actually severing it.

According to one aspect of the present invention, the peripheral paths of two cooperating conditioning members intersect each other, the lowest boundary of the peripheral paths of the conditioning members lying near the peripheral paths of the blades of a corresponding pair of mowing members.

An important property of a mowing machine constructed in this manner is that it is suited for the conditioning of leafy crops such as alfalfa and clover. The conditioning members are preferably of rubber or a similar relatively smooth and resilient material. The crimping members can be provided in addition with projections, such as ribs, engaging each other. The ribs may be 4 cm in height with a width of about 8 cm.

To accomplish a smooth transfer of the crop from the mowing members to the conditioning members, it is of advantage for the lowest boundary of the peripheral paths of the conditioning members to be close to the peripheral paths of the blades of a corresponding mowing member.

The axes of the conditioning members are preferably so close to the mowing members that the peripheral paths of the conditioning members extend close to the peripheral paths of the mowing members. "Close to" means here that the distance between the mowing member and the adjacent conditioning member is smaller than about one eighth of the diameter of the conditioning member. This arrangement results in particular in that the crop can be fed by the mowing members to the conditioning members in an efficient manner without the need for guides between two pairs of conditioning members.

According to a second aspect of the present invention, the axes of rotation of the conditioning members are inclined forwardly from bottom to top, the lower ends of the conditioning members being closer to the ground than the adjacent parts of the peripheral paths of the blades of the mowing members situated in front of the corresponding conditioning members.

According to a third aspect of the present invention, the mowing machine comprises at least three pairs of mowing members disposed in a row, a respective pair of the conditioning members being provided behind each outermost pair of mowing members, these conditioning members conveying cut crop rearwardly and inwardly towards the other outermost pair of conditioning members.

This arrangement enables the crop cut by a relatively broad mowing machine to be deposited on a single swath. It is important for the speed of the conditioning members to be variable. If the speed of the conditioning members is relatively high, the crop can be laid down on a single swath, and if the speed is low a separate swath can be laid down behind each pair of conditioning members.

For a better understanding of the present invention and to show how it may be carried into effect, reference will now be made, by way of example, to the accompanying drawings, in which:

Figure 1 is a plan view of a mowing machine;

Figure 2 is a side view taken in the direction of the arrow II in Figure 1;

Figure 3 is a view of a portion of the machine on an enlarged scale taken in the direction of the arrow III in Figure 2;

Figure 4 is a sectional view taken on the line IV-IV in Figure 3;

Figure 5 is a view of the portion shown in Figure 4, taken in the direction of the arrow V in Figure 4;

Figure 6 is a plan view of the portion shown in Figure 4, taken in the direction of the arrow VI in Figure 4;

Figure 7 is a sectional view of crushing members taken on the line VII-VII in Figure 5;

Figure 8 is a view of a portion of the machine taken in the direction of the arrow VIII in Figure 1;

Figure 9 is a plan view of another mowing machine; and

Figure 10 is a side view of the machine shown in Figure 9, taken in the direction of the arrow X in Figure 9.

The machines reproduced in the drawings are mowing machines for cutting standing crop.

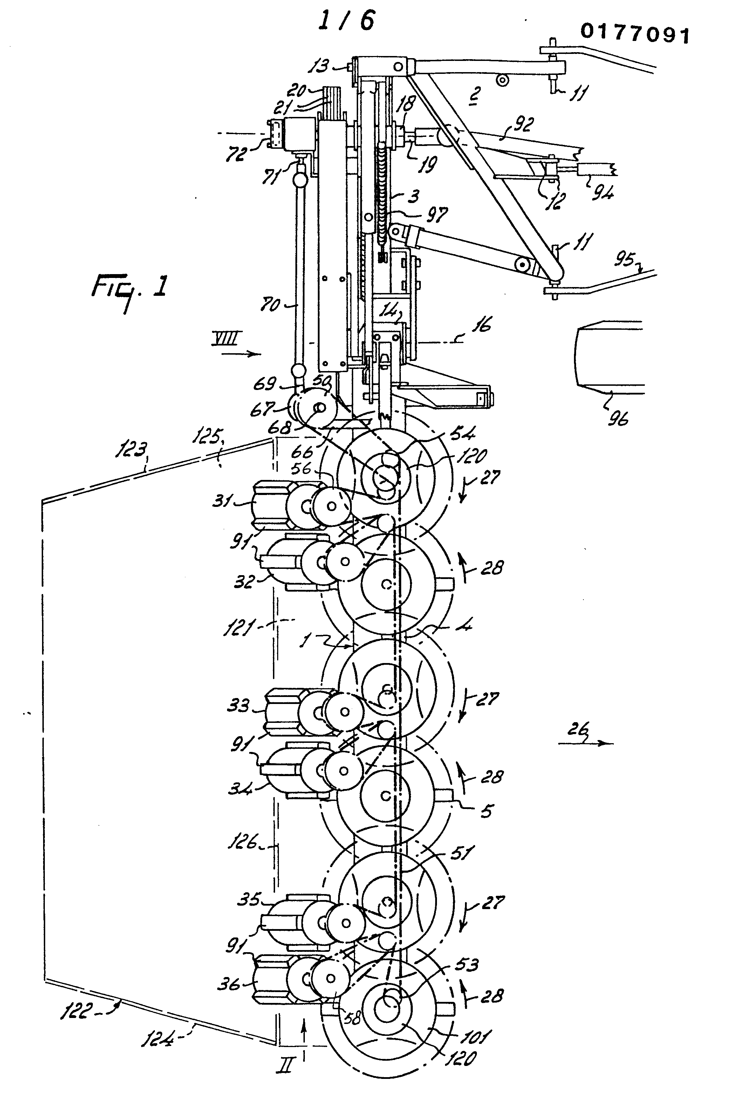

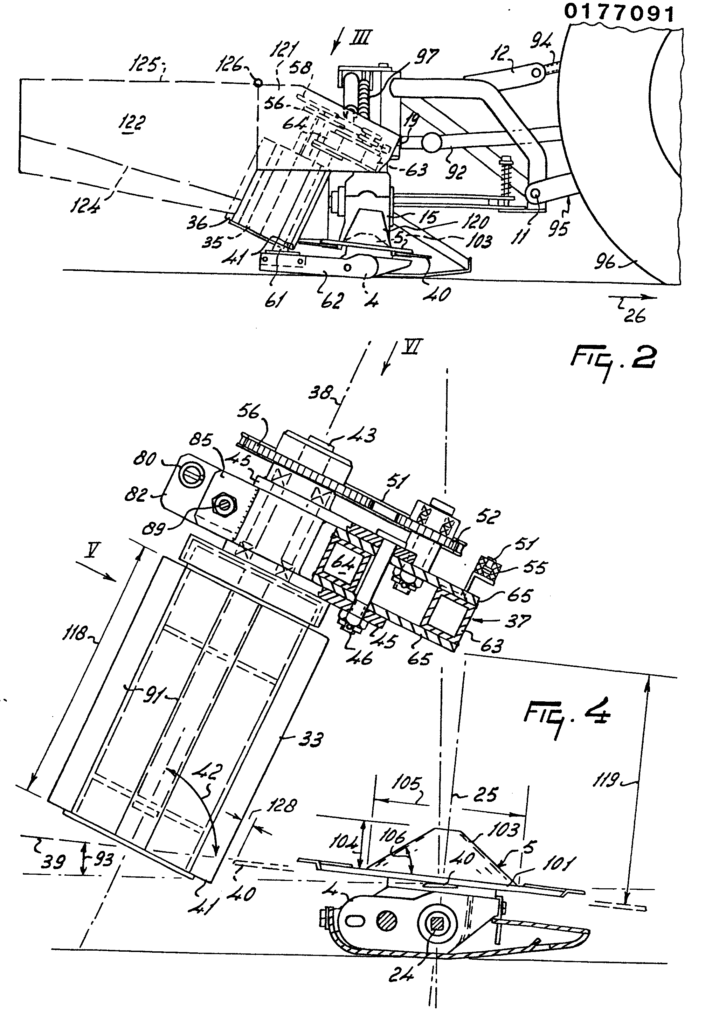

The machine shown in Figures 1 to 8 has a frame 1 provided with a coupling trestle 2 for hitching the machine to the lifting device of a prime mover such as a tractor or similar vehicle. In this specification, the term "tractor" will be used to embrace all such vehicles. The frame also comprises a supporting arm 3 and a cutter support bar 4 fitted with mowing members 5. The coupling trestle 2 has coupling pins 11, for coupling the machine to the lifting arms of the three-point lifting device of a tractor, and lugs 12 for connection to the top bar. One end of the supporting arm 3 is hinged to the coupling trestle 2 by a pivot 13. The other end of the supporting arm 3 is coupled, for pivotal movement about an axis 16, to a transmission box 14 containing transmission members. The transmission box 14 comprises a vertical portion 15 which is rigidly connected to the cutter support bar 4.

A drive shaft 19 extends parallel to the axis of the pivot 13, i.e. in the direction 26 of normal operative travel of the machine. The shaft 19 is supported in a bearing 18 attached to the supporting arm 3. A pulley 20 mounted on the drive shaft 19 is connected by belts 21 to a pulley 22, mounted on a shaft 23 whose axis coincides with the pivot axis 16. The shaft 23 is coupled by means of transmission members, not illustrated, in the transmission box 14 and in the portion 15 to a shaft 24 which extends lengthwise of the cutter support bar 4. The shaft 24 is connected to the mowing members 5 by transmission elements, not illustrated, in the cutter support bar 4. The mowing members 5 comprise cutting disks which are mounted on upwardly extending shafts, not illustrated, in the cutter support bar 4 and are rotatable during operation about axes 25. The axes 25 of the cutting disks 5 lie in a common plane extending during normal operation transversely of the direction 26 of the mowing machine and, in this embodiment, containing the axis of the shaft 24. The cutting disks 5 are connected to the driving shaft 24 in such a manner that they are rotated during operation in the direction of the arrows 27 and 28. Thus, adjacent cutting disks rotate in opposite directions to each other, the front of the cutting disk situated closest to the trestle 2 moving during rotation away from the trestle 2.

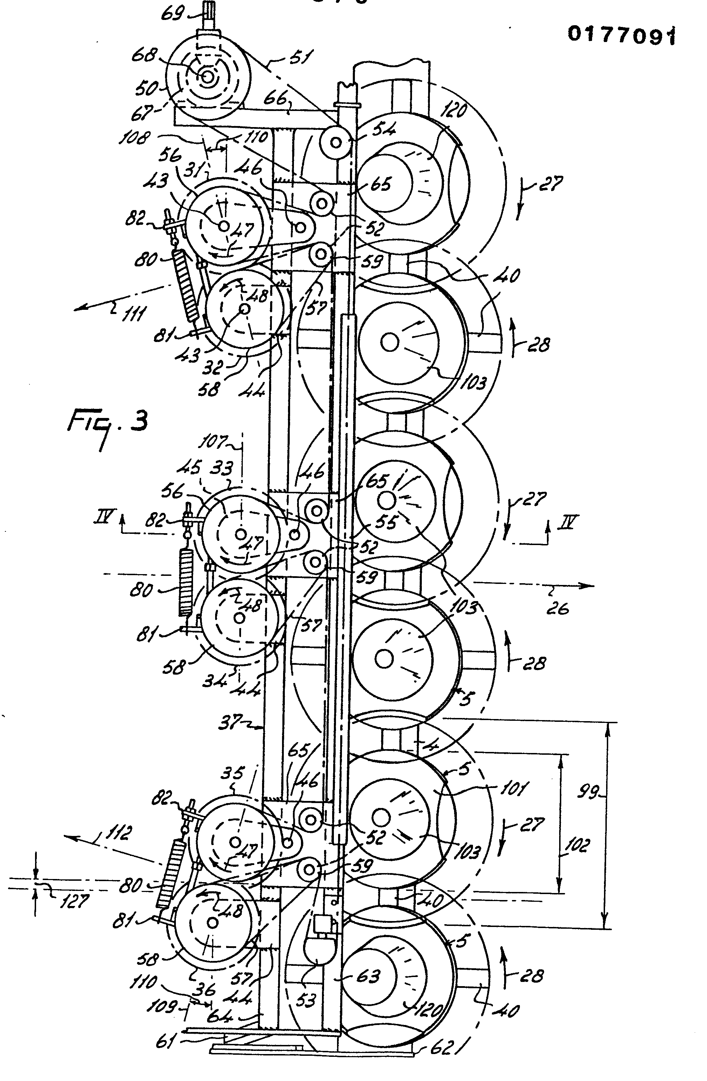

Conditioning members in the form of crushing or crimping members 31 to 36, mentioned hereafter only crushing members, are mounted close to the cutting disks 5. In this embodiment the number of crushing members 31 to 36 is the same as the number of cutting disks 5. They can be regarded as being arranged in pairs, mowing members of each pair moving in opposite directions to each other. The adjacent sides of the mowing members of each pair move during rotation in a direction opposite to the direction 26, i.e. rearwardly. As shown in Figures 1 and 3, the crushing members 31 to 36 are likewise arranged in pairs, with each pair of crushing members mounted close to a respective pair of mowing members.

The crushing members comprise bodies with shafts 43, rotatable about upwardly extending rotary axes 38. The rotary axes 38 of the crushing members are formed by the center lines of the shafts 43. The crushing

-6-                                    0177091

members are mounted on a supporting frame 37 to which they are attached solely by the upper ends of their shafts 43. The supporting frame 37 is situated above the crushing members, which are supported solely by the supporting frame 37 and extend freely downwardly from it. Each of the crushing members with its upwardly extending rotary axis is inclined to the front from bottom to top. The crushing members 31 to 36 are positioned so that their lower ends lie behind the cutting disks 5. At least the lowest parts of the crushing members are situated below a mowing plane 39 in which the cutting edges of mowing blades 40 of the cutting disks 5 move. Because the crushing members are inclined, the foremost points 41 of their lower ends are below the plane 39. The foremost point 41 of each crushing member lies on the lowest boundary of the peripheral paths of the crushing members. The angle 42 between the axes of rotation 38 of the crushing members and the mowing plane 39 is smaller than 90°. In the illustrated embodiment, the angle 42 is approximately 70°. This angle is preferably not smaller than about 60° and not larger than about 80°. During operation the plane 39 is inclined with respect to the ground surface being mown by a small angle 93, e.g., about 5°. As a result, the angle between the axes of rotation 38 of the crushing members and the ground surface being mown is 65°. Thus, the angle between the axes of rotation and the ground can be changed to some extent by changing the angle 93.

The shafts 43 of each crushing member are supported in brackets attached to the frame 37. The bracket supporting one of the shafts 43 of each pair of crushing members is rigidly attached to the frame 37. The shafts 43 of the other crushing members of each pair are supported in brackets 45 which are pivotable about shafts 46 with respect to the frame. The shafts 46 are parallel to the axes of rotation 38 of the respective crushing members.

All of the crushing members 31 to 36 are driven by a common drive mounted on the supporting frame 37. The crushing members of each pair are connected to the drive in such a manner that they rotate during operation in opposite directions as indicated by arrows 47 and 48. These directions of rotation are such that the adjacent sides of the crushing members of each pair move in a direction substantially opposite to the direction 26.

The crushing members are driven in this embodiment by a chain transmission. This drive comprises a driving sprocket 50 over which runs a driving chain 51. The chain 51 is guided near each pair of crushing members by guide wheels 52. The driving sprocket 50 is situated near that end of the cutter support bar 4 which is nearer to the coupling trestle 2. Near the other end of the cutter support bar, the chain runs around a chain tensioner 53. The chain also runs over a guide wheel 54 near the driving sprocket 50 and runs between the chain tensioner 53 and the guide wheel 54 in a guide 55. The guide 55 is situated in front of the guide wheels 52, with respect to the direction 26. The chain also runs over sprockets 56 fixed at the top ends of the crushing member shafts 43 which are mounted on the pivotable brackets 45. In this embodiment the crushing members supported in the rigidly mounted brackets 44 are driven by short chains 57. Each chain 57 runs over a sprocket fixed to the shaft 43 of the corresponding crushing member. Each chain 57 runs over a sprocket 59 mounted above a guide wheel 52 of the long driving chain 51, the sprocket 59 being rigidly connected to the corresponding guide wheel 52. The crushing members are thus all drivingly connected to the driving sprocket 50.

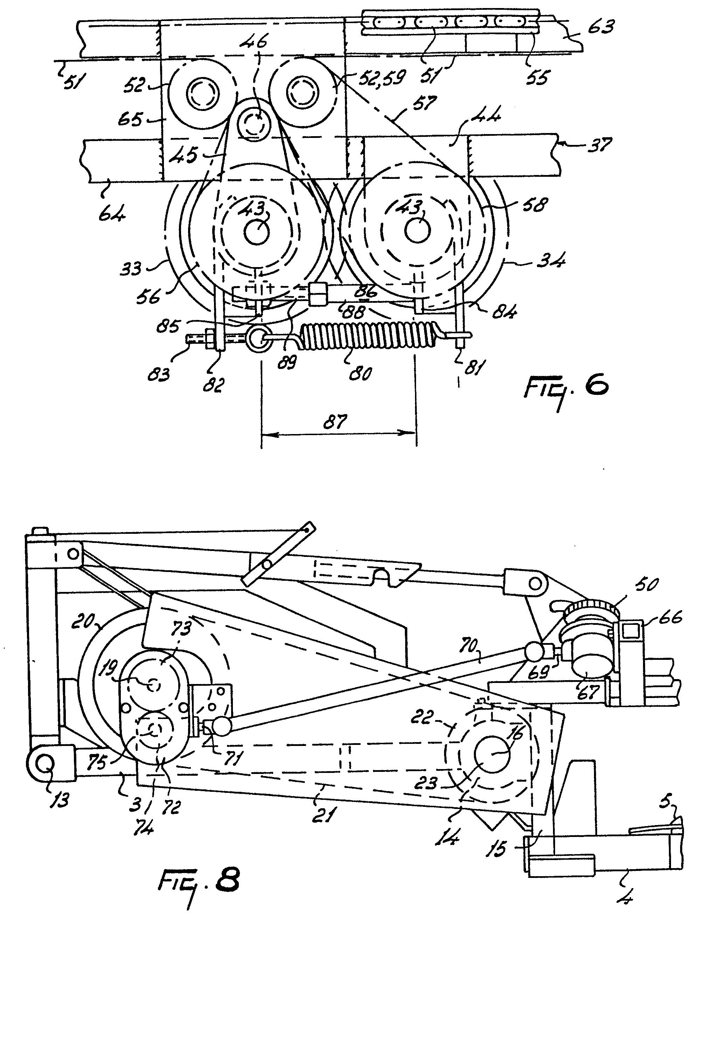

The supporting frame 37 is situated some distance above the cutter disks 5, higher than their rearmost portion. The supporting frame 37 is attached to the cutter support bar 4 only near the ends of the bar 4, the space between the frame 37 and the cutting disks being entirely open. One end of the supporting frame 37 is attached by means of a beam 61 to a bracket 62 secured to the free end of the cutter support bar 4. The supporting frame 37 is connected to the transmission box 14 near the inner end of the cutter support bar 4. The frame 37 comprises in this embodiment two parallel beams 63 and 64 which are parallel to the cutter support bar 4 and are rigidly connected to each other by intermediate beams 65. The end of the beam 63 nearer the trestle 2 is connected to the box 14. The beam 61 is connected to one end of the beam 64. The frame 37 is provided near the inner end of the cutter support bar with a supporting beam 66. A gear box 67, attached to the beam 66, has an output shaft 68 which carries the driving sprocket 50 and an input shaft 69, connected by gear wheels to the output shaft 68. The shaft 69 is connected by an intermediate shaft 70 to an output shaft 71 of a transmission box 72 (Figure 8). The transmission box 72 comprises a gear wheel 73 mounted on one end of the coupling shaft 19 which protrudes into the transmission box 72. The gear wheel 73 meshes with a gear wheel 74 mounted on a shaft 75 extending parallel to the shaft 19. The gear wheels 73 and 74 are change wheels which are exchangeable with each other and with other change wheels; for this purpose they are mounted removably on the corresponding shafts 19 and 75. The shaft 74 is connected to the shaft 71 by means of a right-angle bevel gearing, not shown.

A tensioning device mounted between the brackets of each pair of crushing members tends to move the pivotally supported crushing member towards the other crushing member. These tensioning devices consist in the present embodiment of tension springs 80 attached to lugs 81 and 82 fixed to the crushing member brackets 44 and 45. The spring 85 is connected to one of these lugs for adjustment in the longitudinal direction of the spring, as shown in Figure 6. A bolt 83 connected to the spring is for this purpose adjustable lengthwise relatively to the lug 82. The spring 80 exerts a force which tends to move the crushing member attached to the pivoting bracket 45 toward the crushing member attached to the fixed bracket 44. The bracket 44 of each pair of crushing members is provided with a stop 84, and the bracket 45 of each pair of crushing members has a lip 85 with a stud 86 attached to it. The stud 86 projects beyond the lip 85, the length 87 of this projecting portion being adjustable. The stud 86 comprises for this purpose two parts 88 and 89, which are longitudinally adjustable relatively to each other and are lockable realtively to each other optionally in any one of several positions.

The crushing members are provided with projections such as relatively large ribs 91 in the form of cams or teeth, the ribs of adjacent crushing members engaging each other as shown in Figure 7. The ribs 91 extend along the height of the crushing members and have the same profile over their entire length.

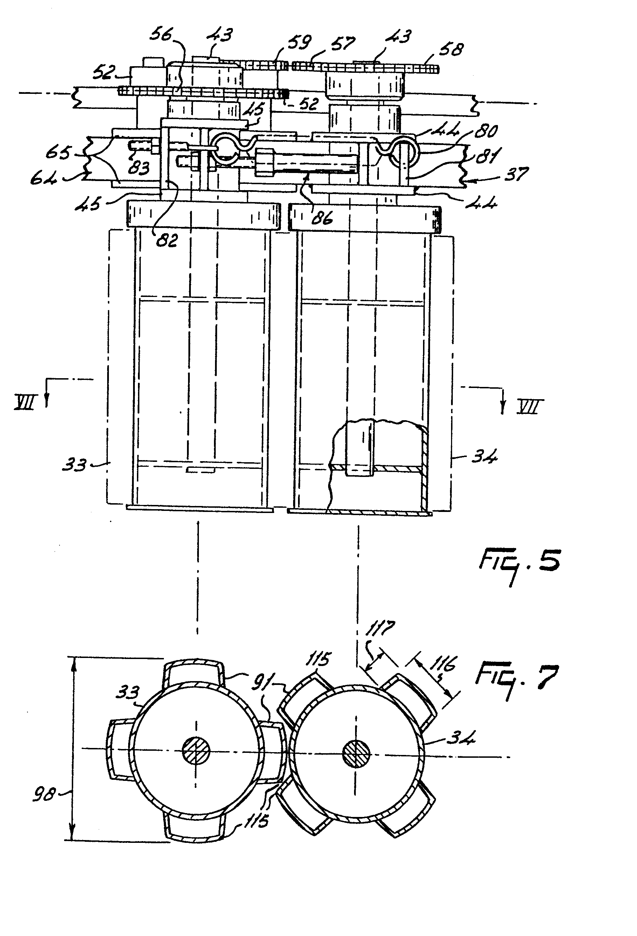

For use, the machine is coupled to the lifting device 95 of a tractor 96. The coupling trestle 2 can be coupled for this purpose by the pins 11 to the lower lifting arms and by the lugs 12 to the top bar 94 of the three-point lifting device 95 of the traactor 96. The shaft 19 is coupled to the power take-off of the tractor 96 by an intermediate shaft 92. The mowing members 5 are driven from the tractor 96 via the shaft 19. The rotation of the shaft 19 is transmitted via the pulleys 20 and 22 and the belt 21 to the transmission in the box 14 and thence to the shaft 24 in the cutter support bar 4. The cutter disks 5 are driven in the directions of rotation 27 and 28 by the shaft 24 via, for example, bevel transmission gears (not shown) in the cutter support bar. The machine travels during operation in the direction 26 so that the rotating cutting disks 5 mow standing crop growing in the field over which the machine is driven. The blades 40 of the cutting disks 5 move in the mowing plane 39 which is preferably nearly parallel to the ground surface or is inclined to it at a small angle of a few degrees, such as the angle 93 of approximately 5° in this embodiment (Figure 4). This angle opens to the rear and can be varied by adjustment of the top bar 94 of the three-point lifting device 95 of the tractor. The cutter support bar 4 bears during travel on the ground to support at least part of its own weight. Part of the weight of the mowing machine is preferably transferred to the vehicle to which the machine is hitched, such as the tractor 96 in this embodiment, by springs or other means 97 (not shown in detail) mounted between the trestle 2 and the cutter support bar 4.

The crushing members are firmly attached by their frame to the cutter support bar 4. The crushing members and the cutting disks can consequently pivot as a unit about the axis 16 relative to the supporting arm 3 which in turn is pivotable about the pivot 13 relative to the trestle 2. The means mounted between the cutter support bar 4 and the trestle 2, such as the tension spring 97 in this embodiment, can thus transfer a part of the weight of the cutter support bar with the crushing members and the frame 37 to the trestle 2 and thereby to the tractor 96.

During operation the rotating cutting disks 5 move the cut crop rearwardly with respect to the travel direction 26. The cut crop is thus conveyed rearwardly over the cutter support bar mainly by the oppositely facing parts of each pair of cutting disks, these parts moving rearward with respect to the direction 26. The material is moved to the rear mainly between the axes of rotation 25 of the two adjacent cutting disks of each pair. As shown in particular in Figures 1 and 3, each pair of crushing members is mounted behind this area of each respective pair of cutting disks. The rearwardly displaced cut material is the gripped by the crushing members of each pair and conveyed rearwardly between them by their chosen direction of rotation. The crushing members are positioned so that, as viewed in the direction 26, the adjacent sides of the crushing members of each pair lie approximately centrally between the cutting disks of each pair. The length 87 of each of the studs 86 is preferably adjusted so that, when no material is present between the crushing members, they are kept apart from each other in spite of the effect of the springs 80 which tend to move the crushing members of each pair towards each other, as shown in Figure 7. The tension of the spring 80 is adjusted so that the cut crop to be conditioned, carried rearward between the crushing members during the mowing operation, is sufficiently crushed and/or crimped. Depending on the nature of the crop and the rate at which the crop is conveyed between the crushing members, the tension of the spring can be adjusted by means of the bolt 83 which is adjustable lengthwise of the spring 80 with respect to the lip 82. The distance between the crushing members of each pair of crushing members can be adjusted, when no cut material is present between them, by changing the length 87. For this purpose the portions 88 and 89 of the stud 86 can be adjusted longitudinally one with respect to the other.

The length 87 thus determines the maximum depth by which the ribs of the crushing members of each pair intermesh one with the other. This depth of mutual engagement of the ribs affects the conditioning of the crop moving rearwardly between the crushing members, this movement usually taking place in the longitudinal direction of the stalks of the leaf. The crop is thereby crimped mostly over the edges 115 of the ribs. The distance between the breaks and the crop passed through therefore also depends on the width 116 of the ribs. The amount to which the crop is broken is also affected by the height 117 of the ribs and by the amount by which the peripheries of the crushing members overlap each other. Of importance in this respect is the depth of mutual engagement of the ribs over their height 117. This in its turn depends on the amount of crop present during operation between the crushing members of a pair. If a large amount of crop is present between the crushing members, the ribs will be unable to engage to their full depth. The height 117 of the ribs plays for this reason also a part as regards the amount of crop usually present therebetween during operation. A part is likewise played with regard to this quantity by the height, the nature and compactness of the crop on the field, as well as by the rate of travel of the mowing machine and the rotational speed of the crushing members. The length 87 can accordingly be chosen at will in accordance with the aforementioned circumstances.

The crushing members are positioned so that practically all the crop mown by the cutting disks is received and conditioned by the pairs of crushing members. The foremost point 41 of the lower end of each crushing members is therefore situated close to the plane 39 and preferable below this plane. The distance at which this point 41 lies below the plane 39 can be chosen according to the circumstances. The height 118·

of the crushing members is such that the thickness of the layer of the crop to be removed can be received between the crushing members to a sufficient degree. The height of the frame 37 above the cutting disks is such that the crop can easily move rearwardly over the cutting disks. The frame 37 can moreover form a guide for tall crop in order to guide the top of the crop so that it moves towards the crushing members with its lower ends first. The crushing members extend freely downwardly from the frame. Thus no elements of the machine are present between the crushing members of each pair or between adjacent pairs of crushing members. In consequence, the cut crop can move towards the crushing members without hindrance. Even larger pieces of material, undesirably present among the crop, can therefore be removed to the rear over the tops of the cutting disks without the danger that the crushing members or any other parts of the machine will be damaged.

The diameter 98 of the crushing members is chosen so that all the crop conveyed rearwardly by each pair of cutting disks is received by a pair of crushing members and is fed therebetween to be half-broken. Substantially no crop will be moved rearwardly between the crushing members 32 and 33 or 34 and 35 spaced from each other, as all the cut crop is fed by the pairs of cutting disks to the corresponding pairs of crushing members and is conditioned by the latter.

The feed of the material to the pairs of crushing members is affected by the ratio of the diameter 98 of the crushing members to the diameter 99 of the cutting disks. This ratio must not be too large. In this embodiment the diameters 98 of all the crushing members are the same and are uniform over the whole length of each crushing member. The points of each crushing member farthest from the axis of rotation 38 lie therefore on a cylindrical surface centred on the axis 38. The height 117 in this embodiment is approximately 1/8 of the diameter 98. This ratio is preferably smaller than 1/5 and larger than 1/12. The diameters 98 of two crushing members forming a pair overlap each other at most in the same ratios as the ratio between the height 117 and the diameter 98. The region where the crushing members of each pair more or less overlap each other lies approximately in the middle between the axes of rotation of the corresponding pair of mowing members. In this embodiment the machine comprises three pairs of mowing members with three pairs of crushing members. The outermost pairs of crushing members are shifted slightly toward the center of the cutter support bar by a distance 127 with respect to the plane passing centrally between the axes of rotation of the corresponding pair of mowing members. The diameter 99 of the path executed by the ends of the blades of the cutting disks during rotation is in this embodiment twice as large as the diameter 98 of the crushing members. The diameter 99 is preferably not less than 1.5 times and not more than 3 times the diameter 98. In this embodiment the diameter 99 is about 50 cm, the diameter 98 being about 25 cm and the dimensions 116 and 117 about 8 and 4 cm respectively. The cutting disks comprises a disk-shaped part 101 with a diameter 102 of about 35 cm. The mowing blades extend beyond the disk 101. The disk-shaped part 101 has in this embodiment a conical portion 103. This extends to a height 104 above the upper surface of the disk 101 and the angle 106 between its conical surface and its base is about 35°. The diameter 105 of the part 103 equals about half the diameter of the disk 101.

The crop conveyed by the crushing members is discharged obliquely upwardly and rearwardly owing to the angle 42 enclosed between the axes of rotation of
the crushing members and thereby their periphery on the
one hand and the mowing plane 98 and thereby the ground
surface on the other.  As a result, the half-broken
crop is loosely deposited on the ground so that it can
easily dry.  The amount to which the material is
removed slantingly upward depends chiefly on the angle
42 and the speed of the crushing members.  This speed
can be altered by interchanging the unequal change
wheels 73 and 74 or exchanging them with other change
wheels.  The change wheels are preferably such that, at
a given speed of rotation of the shaft 19, the crushing
members can be driven optionally at any one of two or
more speeds of rotation lying preferably between about
350 and 800 revolutions per minute.  The speed of
rotation of the crushing members can be chosen independently of the speed of the mowing members 5 because the
cutting disks and the crushing members are drivingly
connected to the shaft 19 independently of each other.
The greater or smaller the speed of rotation of the
crushing members, the greater or smaller the speed at
which the material will be discharged from between the
crushing members.  It is thereby possible to control to
some extent the looseness with which the material is
deposited on the ground.  The choice of the speed of
rotation will also depend on the manner in which the
material is to be half-broken between the crushing
members.

The crushing members 33 and 34 are situated at the
same distance as each other behind the cutting disks.
A line 107 passing horizontally through corresponding
points on the axes of rotation of the crushing members
33 and 34 lies, depending on the position of the
crushing members one with respect to the other,
substantially parallel to the bar 4.  The pairs of
crushing members locate near the ends of the cutter

-16-    **0177091**

support bar of the mowing machine are positioned preferably so that, as shown in Figure 3, the lines 108 and 109 passing through corresponding points on the axes of rotation of the crushing membrs 31, 32 and 35, 36 respectively lie at an angle 110 to the length of the cutter support bar. The angle 110 is preferably larger than 5° and smaller than 25°. In this embodiment the angle 110 is approximately 15°. The angles 110 open in opposite directions. With this arrangement one of the crushing members 31, 32 and 35, 36 respectively of each pair is slightly farther behind the cutter support bar 4 than the other crushing member. As a result of this disposition of the crushing members, the crop conveyed during operation between the corresponding crushing members is discharged in the directions 111 and 112, directed obliquely rearwards towards the middle behind the mowing unit of the machine. The material discharged by each of these pairs of crushing members is therefore deposited on a swath lying closer to the middle of the path of the cutter support bar 4 than would be the case if the lines 108 and 109 were parallel to the line 107. The value of the angle 110 influences the closeness of the deposited swaths to the middle. The speed of rotation at which the crushing members are driven also influences this. The angle 110 is chosen, for instance, so that, with not too high a speed of rotation, each of the crushing members deposits the material on the ground in swaths which are spaced apart from one another.

The speed of rotation can also be selected so that the swaths of the outermost pairs of crushing members coincide with the swath deposited by the innermost pair of crushing members 33 and 34, with the result that the cut and half-broken crop is deposited in one large swath behind the machine. In this respect the angle 42 again has an influence, as the distance over which the material is thrown toward the middle by the outermost pairs of crushing members in the directions 111 and 112 also depends on the direction in which the material is discharged obliquely upward from between the crushing members. This direction depends in turn on the angle 42.

The upwardly extending crushing members are particularly suited for cooperation with mowing members which, as in this embodiment, are in the form of cutting disks. The material can then be conveyed loosely rearward over the cutting disks and received between the crushing members over the desired height. In consequence the material is uniformly half-broken between the crushing members. The machine is thus particularly suited for conditioning stalky leafy crops, where the stalks are half-broken but the leaf is not detached from the stalk. Loss of leaf is thereby prevented. The crushing members are therefore particularly suited for conditioning alfalfa or clover.

Being directed obliquely forward and upward, the crushing members will be able to receive all of the crop fed to them by the cutting disks. In this respect it can be of advantage that the cutting disks are provided with the upwardly directed conical portions 103 which lift the crop to some extent. The positioning of the lower ends of the crushing members at a small distance 128, for example about 2 cm, from the path executed by the ends of the mowing blades at the diameter 99 prevents the crop from escaping between the crushing members and the cutting disks without being conditioned by the crushing members. The distance 128 is preferably not greater than 1/8 and not smaller than 1/16 of the diameter 98. In this respect it can be of advantage that the point 41 lies lower than the plane 39.

The crushing members 31 and 36 are slightly further from the path having the diameter 99 than the other crushing members because the corresponding pairs of crushing members are inclined at the angle 109, 110 with respect to the cutter support bar 4. This does not adversely affect the reception of the crop fed by the corresponding pair of cutting disks to these pairs of crushing members. In this respect it can be of advantage that the cutting disks mounted at the ends of the cutter support bar are fitted with conical portions 120 higher than the conical portions 103 on the other cutting disks.

The crushing members are preferably of a material having some resilience, for example rubber or plastics. As a result, the periphery of the crushing members can yield to some extent so that rocks or other obstructions carried with the crop can pass through the crushing members without damaging them. Moreover, the crushing members have relatively smooth peripheries so as to convey the crop in an advantageous manner. The smoothness of the peripheries of the crushing members enables the crop to be half-broken merely in the desired manner without being damaged further.

In this embodiment the crushing members are fitted with four broad projecting ribs, which has a favourable effect. However, the ribs can take other forms. For example, they may be narrower in order to break the stalk to a greater degree, or lower to influence the breaking effect in another manner. The number of ribs fitted around the periphery of the crushing members can also be different.

The carrying frame with the chain drive is provided with a protective cover 121. Close behind it there is a guide hood 122, indicated merely schematically by dash lines. This guide hood 122 comprises a top portion 125 and side portions 123 and 124 extending downwardly from the top portion. The guide hood can, however, be formed in a manner different from that shown. The guide hood serves to guide the crop in a desired manner. It is also possible to make the hood adjustable with respect to the crushing members. For example, it can be hinged to the protective cover 121 for movement about the horizontal pivot 126 extending transversely of the direction 26. Preferably, the guide hood 122 can then be secured at will in any one of at least two different positions with respect to the protective cover 121. By changing its position the guide cap can be adapted, for example, to the speed at which the crushing members are driven and to the resulting manner in which the material conditioned by the crushing members is discharged.

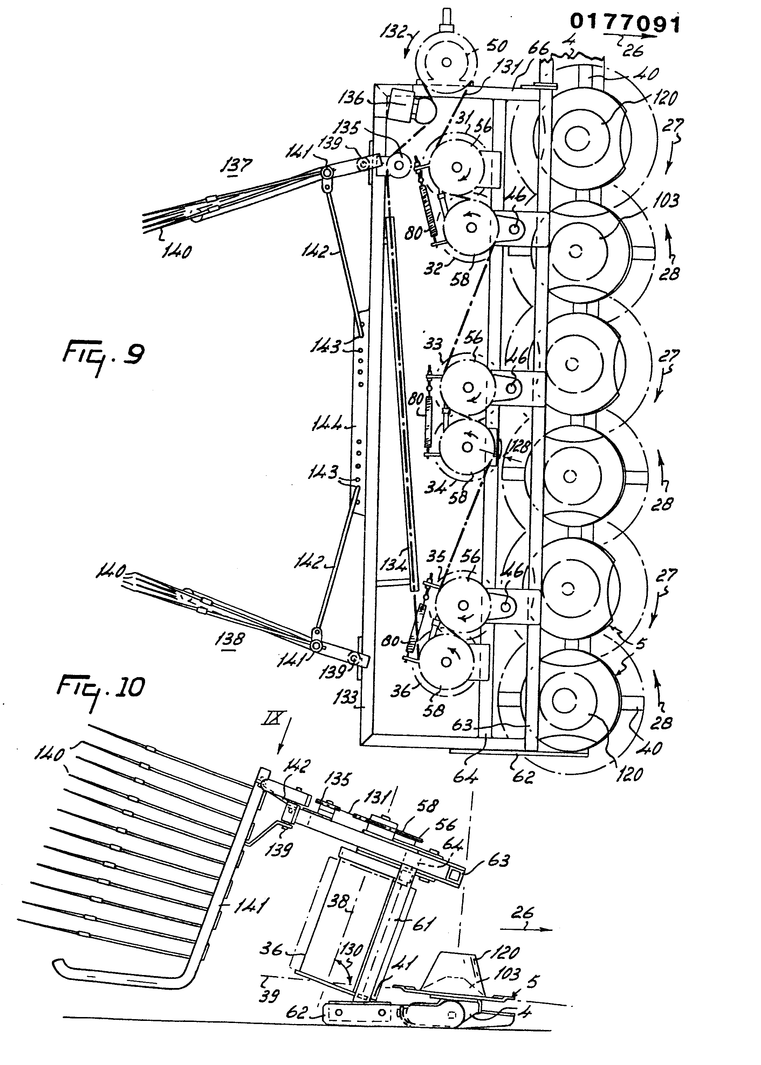

Figures 9 and 10 shown an embodiment broadly similar to that shown in Figures 1 to 8. Corresponding parts are therefore indicated by the same reference numbers as in Figures 1 to 8. In the embodiment of Figures 9 and 10, however, the axes of rotation 38 of the crushing members 31 to 36 are less inclined. The angle 130 between the axes and the ground surface 39 is approximately 75°.

The crushing members 31 to 36 are again driven by a chain transmission; the driving chain 131 is, however, led around the driven wheels 56 and 58 of the corresponding crushing members in a different manner, shown in Figure 9. When driving the crushing members, the driving wheel 50 rotates in the direction 132.

The frame 37 is provided in this embodiment with a supporting beam 133, disposed some distance behind the beam 64 and parallel to it. The beam 133 supports a chain guide 134 for the chain 131. A guide wheel 135 and a chain tensioner are mounted on the beam 133 near the driving wheel 50. As in the preceding embodiment, the frame 37 and the chain drive mounted on it can again be protected by a protective cover which, however, is not shown in Figures 9 and 10.

Instead of a guide hood 122, the embodiment shown in Figures 9 and 10 is provided with two upwardly extending guide members 137 and 138. The guide members are hinged to the supporting beam 133 by means of upwardly extending pivots. These pivots are situated approximately directly behind the rotary axes of the outermost crushing members 31 and 36. The guide members comprise a number of flexible prongs 140 attached to a carrier 141 which is pivotably connected to the beam 133. The prongs 140 extend with at least a large horizontal component rearwardly from the carrier 141. As viewed from the side of the machine (Figure 10), the carrier 141 is preferably disposed parallel to the crushing members. The guide members can be fixed by means of locking elements 142 optionally in any one of at least two different positions with respect to the beam 133. For this purpose the locking element 142 is pivotably connected to the carrier 141 and can be fitted at will in any one of several holes in a strip 144 fixed to the beam 133. The guides 137 and 138 should extend preferably to a height above ground higher than the top of the crushing members, as appears in this embodiment from Figure 10.

The material discharged by the outermost pairs of crushing members can thus be guided by the guide members in such a manner that the cut and half-broken crop will be deposited behind the mowing machine on a swath of desired width. In this embodiment, the space between the guide members 137 and 138 is open at the top. In consequence, the crop flung away with a greater or lesser velocity and more or less upwardly depending on the speed of rotation of the crushing members can move freely to fall to the ground greatly loosened. As the angle 130 is greater than the angle 42 in the foregoing embodiment, the material will not be flung upward to such an extent and this will affect the manner in which the material will descend behind the machine. In other respects the machine shown in Figures 9 and 10 works in principle in the same manner as the machine of Figures 1 to 8. The chain 131 runs around the sprockets 56 and 58 of each pair of crushing members in such a manner that these can again be driven in the desired directions.

Though in the embodiments of the Figures 1 - 10 the conditioning members act as crushing and/or crimping rollers, they can also be carried out to serve for conditioning the crop in other ways.

Whilst various features of the mowing machines that have been described, and that are illustrated in the drawings, will be set forth in the following claims as inventive features, it is to be noted that the invention is not necessarily limited to these features and that it encompasses all of the features that have been described both individually and in various combinations.

CLAIMS

1. A mowing machine for cutting crop, comprising at least one pair of mowing members (5) provided with blades (40), the mowing members of each pair being rotatable in opposite directions to each other about upwardly directed axes (25), the machine further comprising pairs of members (31 to 36) for conditioning cut crop, these members (31 to 36) being disposed behind the mowing members (5), with respect to the normal direction (26) of operative travel of the machine, the members (31 to 36) of each pair being rotatable in opposite directions (47, 48) to each other about upwardly directed axes (38), characterized in that the axes of rotation (38) of the conditioning members (31 to 36) are inclined forwardly from bottom to top, the lower ends of the conditioning members (31 to 36) being closer to the ground than the adjacent parts of the peripheral paths of the blades (40) of the mowing members (5) situated in front of the corresponding conditioning members (31 to 36).

2. A mowing machine as claimed in claim 1, characterized in that the peripheral paths of two cooperating conditioning members (31, 32; 33, 34; 35, 36) intersect each other, the lowest boundary (4) of the peripheral paths of the conditioning members (31 to 36) lying near the peripheral paths of the blades (40) of a corresponding pair of mowing members (5).

3. A mowing machine as claimed in any one of the preceding claims, characterized in that the mowing machine comprises at least three pairs of mowing members (5) disposed in a row, a respective pair (31, 32; 35, 36) of the conditioning members being provided behind each outermost pair of mowing members (5), these conditioning members (31, 32; 35, 36) conveying cut crop rearwardly and inwardly towards the other outermost pair of conditioning members.

4.  A mowing machine as claimed in any one of the preceding claims, characterized in that the conditioning members (31 to 36) are provided with projections in the form of ribs extending over the entire height of the respective conditioning members (31 to 36) parallel to their axes of rotation (38), the projections (91) of the cooperating conditioning members (31, 32; 33, 34; 35, 36) of each pair intermeshing with one another.

5.  A mowing machine as claimed in any one of the preceding claims, characterized in that the conditioning members (31 to 36) are attached to the machine near their upper ends only and extend freely downwardly from their attachment to the machine.

6.  A mowing machine as claimed in any one of the preceding claims, characterized in that one (32, 34, 36) of each pair of conditioning members is fixed in position with respect to a frame of the mowing machine whereas the other conditioning member (31, 33, 35) is pivotable relative to the frame about a pivot axis (46) extending parallel to the axis of rotation (38) of the respective conditioning member (31, 33, 35), an adjusting mechanism (86) being provided between the conditioning members (31, 32; 33, 34; 35, 36) of a pair for adjusting the minimum spacing between the axes of rotation (38) of the conditioning members and a member (80) exerting a force being mounted between the conditioning members (31, 32; 33, 34; 35, 36) of a pair, the force being directed to bias the conditioning members towards each other.

7.  A mowing machine as claimed in any one of the preceding claims, characterized in that the conditioning members of a pair situated near an end of the mowing unit are mounted relatively to each other so that corresponding points on the axes of rotation (38) of the conditioning members (31, 32; 35, 36) lie on a line which is inclined to the direction in which a cutter support bar (4) or the row of mowing members (5) extend.

8. A mowing machine as claimed in any one of the preceding claims, characterized in that the frame (37) on which the conditioning members (31 to 36) are mounted is attached to the cutter support bar (4) near the ends thereof only.

9. A mowing machine as claimed in any one of the preceding claims, characterized in that at least one conditioning member (31, 33, 35) of each pair is connected to a sprocket (56), around which a driving chain (51) is led, the other conditioning member (32, 34, 36) of each pair being connected to a sprocket about which runs a chain (57) which is driven by a guide wheel (59) around which the driving chain (51) is led, the driving chain (51) being led additionally about a sprocket (58) connected to the other conditioning member (32, 34, 36) of each pair.

10. A mowing machine as claimed in any one of the preceding claims, characterized in that the conditioning members are drivably connected to a coupling shaft (19) which can be connected by means of an intermediate shaft (92) with a power take-off of a prime mover to which the mowing machine is coupled, a transmission means (72), by which the drive speed of the conditioning members (31 to 36) can be set at will to any one of at least two different values, being mounted between the coupling shaft (19) and the conditioning members (31 to 36).

11. A mowing machine as claimed in any one of the preceding claims, characterized in that the mowing members (5) are connected to an input shaft (19) independently of the drive to the conditioning members (31 to 36).

12. A mowing machine as claimed in any one of the preceding claims, characterized in that the mowing members (5) comprise cutting disks (101) having a diameter (99) which is about twice that (98) of the conditioning members (31 to 36).

13. A mowing machine as claimed in any one of the preceding claims, characterized in that the cutting disks (101) have in their centrally situated part an upwardly extending element (103) for transporting the crop.

14. A mowing machine as claimed in any one of the preceding claims, characterized in that the peripheral path executed by the outermost parts close to the lower end of a conditioning member (31 to 36) is situated at a small distance from the peripheral path executed by the outermost part of a mowing blade (40) of the corresponding mowing member (5).

FIG. 1

0177091

FIG. 2

FIG. 4

3 / 6

0177091

Fig. 3

FIG. 5

FIG. 7

0177091

FIG. 6

FIG. 8

0177091

FIG. 9

FIG. 10

## European Patent Office

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-2 109 662  (MATHEWS)  * Page 1, line 115 - page 2, line 100 * | 1,2,5, 13,14 | A 01 D  43/10 |
| A |  | 6,12 | |
| A | FR-A-2 108 290  (INTERNATIONAL HARVESTER) * Page 2, line 19 - page 3, line 17; page 5, line 8 - page 6, line 7; figures 4,7,8 * | 1-4,6, 7,9,14 | |
| A | DE-B-1 507 154  (ALMABAL) * Column  6, line 62 - column 8, line 25; figures 7,8 * | 2,14 | |
| A | EP-A-0 116 662 (KLÖCKNER-HUMBOLDT-DEUTZ) * Page  13,  line  17 - page 15, line 19 * | 10 | TECHNICAL FIELDS SEARCHED (Int. Cl.4)  A 01 D |
| A | FR-A-2 090 637  (INTERNATIONAL HARVESTER) * Page 7, lines 25-30; figure 5 * | 13 | |
| A | DE-A-2 336 060  (KRONE) | | |
| A | DE-A-2 815 550  (STRAUB) | | |
| | ---                    -/- | | |

The present search report has been drawn up for all claims

| Place of search | Date of completion of the search | Examiner |
|---|---|---|
| THE HAGUE | 02-01-1986 | DE LAMEILLIEURE D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82

European Patent
Office

**EUROPEAN SEARCH REPORT**

01 77 001

Application number

EP  85 20 1501

| | DOCUMENTS CONSIDERED TO BE RELEVANT | | Page  2 |
|---|---|---|---|
| Category | Citation of document with indication, where appropriate, of relevant passages | Relevant to claim | CLASSIFICATION OF THE APPLICATION (Int. Cl.4) |
| A | US-A-3 608 287  (GAERTNER) | | |
| A | US-A-4 035 991  (OOSTERLING) | | |
| A | FR-A-1 520 475  (KUHN) | | |
| | | | **TECHNICAL FIELDS SEARCHED (Int. Cl.4)** |

The present search report has been drawn up for all claims

| Place of search | Date of completion of the search | Examiner |
|---|---|---|
| THE HAGUE | 02-01-1986 | DE LAMEILLIEURE D. |